# EUROPEAN PATENT APPLICATION

(11) **EP 1 936 019 A1**
(43) Date of publication of application: **25.06.2008**
(21) Application number: 07122370.5
(22) Date of filing: 05.12.2007
(51) Int. Cl.: D06F 37/42, D06F 37/30, D06F 37/40

(54) **Washing machines having motor braking circuits**

(30) Priority: 20.12.2006 US 642296
(71) Applicant: General Electric Company, Schenectady, NY 12345 (US)
(72) Inventor: Hollenback, Robert K., Fort Wayne, IN 46814 (US); Ley, Bruce Calvin, Ossian, IN 46777 (US); Kumfer, Brent, Fort Wayne, IN 46814 (US); Brubaker, Justin, Fort Wayne, IN 46802 (US)
(74) Representative: Bedford, Grant Richard

(57) **Abstract**

A washing machine (10) is provided that includes a motor (12), an inductive winding device, a motor control unit (14), and a braking circuit (18). The motor control unit is in electrical communication with the motor and the inductive winding device. The braking circuit is in electrical communication with the inductive winding device and the motor control unit. The braking circuit dissipates a braking energy from the motor through the inductive winding device and the motor control unit controlling the braking energy so as to avoid activation of the inductive winding device.

## Description

The present disclosure is related generally to washing machines. More particularly, the present disclosure is related to washing machines having motor braking circuits and methods of braking.

Vertical axis washing machines, also known as top loading washing machines, represent a large portion of the overall washing machine consumer market.

Most vertical axis washing machines include a spin cycle for removing water and/or detergents from the laundry using centrifugal force. During a typical spin cycle, the washing machine spins the laundry tub at relatively high speed. At the termination of the spin cycle and/or when the door of the machine is opened during the spin cycle, it is desirable to brake the motor to minimize spin tub run down speed.

Conventionally, the braking of the motor has been achieved by connecting resistors across the motor windings. This technique has the disadvantage that relatively high power resistors are required and these add to the cost of the laundry machine.

Accordingly, there is a need for washing machines that overcome, alleviate, and/or mitigate one or more of the aforementioned and other deleterious effects of prior art washing machines.

According to a first aspect of the present invention, a washing machine is provided that includes a motor, an inductive winding device, a motor control unit, and a braking circuit. The motor control unit is in electrical communication with the motor and the inductive winding device. The braking circuit is in electrical communication with the inductive winding device and the motor control unit. The braking circuit dissipates a braking energy from the motor through the inductive winding device and the motor control unit controlling the braking energy so as to avoid activation of the inductive winding device.

A washing machine is also provided that includes a motor, a motor control unit, a mode shifter, a basket, an agitator, and a mode-shifting braking circuit. The motor control unit is in electrical communication with the motor. The mode shifter is controlled by the motor control unit between a first state and a second state. The basket and agitator configured to be driven by the motor via the mode shifter. The agitator is driven by the motor when the mode shifter is in the first state, while the basket and agitator are driven by the motor when the mode shifter is in the second state. The mode-shifting braking circuit is resident on the motor control unit so that the circuit can dissipate a braking energy from the motor through the mode shifter only to a level sufficient to maintain the mode shifter in the first state.

A method of controlling a washing machine during a braking operation is also provided. The method includes dissipating a braking energy from a motor generated during the braking operation through an inductive winding device only to a level sufficient to maintain the inductive winding device in an un-activated state.

Various features and advantages of the present disclosure will be appreciated and understood by those skilled in the art from the following detailed description and drawings, in which:
FIG. 1 is a sectional view of a washing machine according to an exemplary embodiment of the present disclosure;
FIG. 2 illustrates an exemplary embodiment of a mode-shifting braking circuit according to the present disclosure;
FIG. 3 illustrates a prior art braking circuit; and
FIG. 4 illustrates an exemplary embodiment of a method of controlling a washing machine according to the present disclosure.

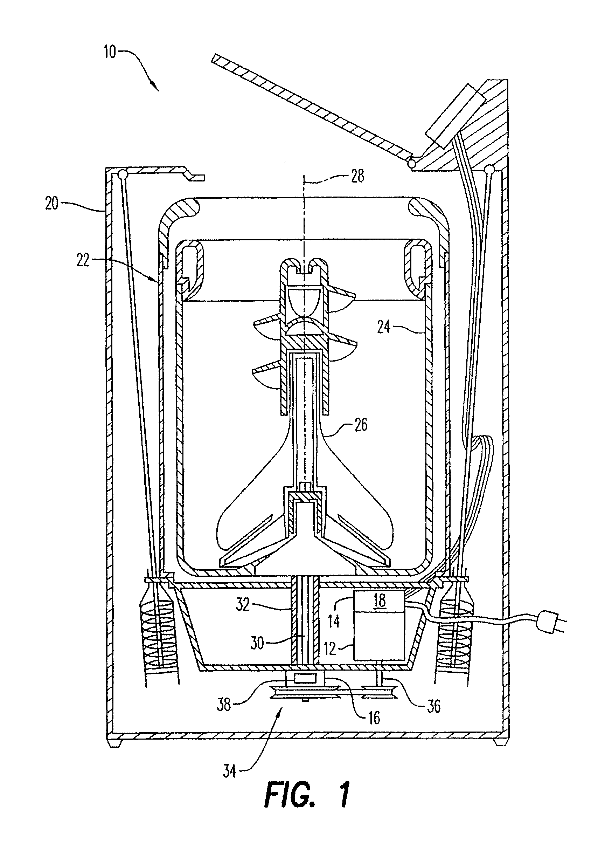

Referring to the drawings and in particular to FIG. 1, an exemplary embodiment of a washing machine ("washer") according to an exemplary embodiment of the present disclosure is shown and is generally referred to by reference numeral 10. For purposes of clarity, only those aspects of washer 10 necessary for understanding of the present disclosure are described herein.

Washer 10 includes a motor 12, a motor control unit 14, and a mode shifter 16. Motor 12 is three-phase alternating current (AC) induction motor and, in some embodiments includes motor control unit 14 integral therewith. Motor control unit 14 includes a mode-shifting braking circuit 18 resident thereon. Circuit 18 is configured, upon receipt of a stopping signal, to place motor 12 into generating mode in a known manner. In this manner, the mechanical energy of washer 10 is transformed into electrical energy on the motor inverter's DC bus voltage.

Advantageously, circuit 18 is configured to dissipate the energy from the DC bus voltage through mode shifter 16. Thus, washer 10 having circuit 18 takes advantage of an existing washing machine component (e.g., mode shifter 16) to dissipate the energy and, thus, eliminates the need for the high power resistors of the prior art. However, motor control unit 14 is configured to vary the energy supplied to mode shifter 16 so as to avoid activation of the mode shifter.

Washer 10 includes an outer housing 20 supporting a tub 22, a basket 24, an agitator 26, motor 12, motor control unit 14, and mode shifter 16 in a known manner. Basket 24 is configured to hold articles such as clothes to be washed.

During a spin cycle, basket 24 and agitator 26 are configured to be driven by motor 12 to rotate at a high speed about vertical axis 28. In this manner, liquid within the articles is removed by the centrifugal force imparted by the spin cycle and is allowed to exit the basket through openings (not shown). However, during a washing cycle, only agitator 26 is configured to be driven by motor 12 to rotate back-and-forth about a vertical axis 28 so that the clothes in the basket are agitated. Mode shifter 16 is configured to prevent rotation of basket 24 during the washing cycle in a known manner.

For example, agitator 26 is secured to an agitator drive shaft 30 and basket 24 is secured to a basket drive shaft 32. Motor 12 is coupled to mode shifter 16 by a transmission 34. Transmission 34 is configured to transmit rotary motion imparted on a motor shaft 36 by motor 12 to mode shifter 16.

During the washing or agitating cycle, mode shifter 16 is in a first state where the mode shifter is configured to transmit the rotary motion from transmission 34 to agitator drive shaft 30. In the first state, mode shifter 16 is engaged/activated so as to lock inner basket 24 to outer basket 22 so that the inner basket does not rotate. However, in the spin cycle, mode shifter 16 is in a second state (e.g., disengaged/deactivated) where the mode shifter is configured to transmit the rotary motion from transmission 34 to both agitator and basket drive shafts 30, 32 so that inner basket 24 is rotated.

Mode shifter 16 is in electrical communication with motor control unit 14. Thus, mode shifter 16 can be selectively switched by motor control unit 14 between the first and second states.

In the illustrated embodiment, mode shifter 16 includes a solenoid 38 that moves the shifter between the first and second states. During the wash or agitate cycle, mode shifter 16 is engaged and placed into the first state where the mode shifter is configured to transmit the rotary motion from transmission 34 only to agitator drive shaft 30. To do so, the motor control unit 14 applies an engage voltage to solenoid 38 of about 130 volts AC. Once engaged, motor control unit 14 reduces the control voltage to solenoid 38 to a hold-in level of about 30 volts AC.

During the spin cycle, motor control unit 14 removes the mode shifter control voltage and gravitational forces cause the mode shifter to go to the second state where the mode shifter is configured to transmit the rotary motion from transmission 34 to both agitator and basket drive shafts 30, 32.

Advantageously, circuit 18 is configured to dissipate the energy generated during braking through solenoid 38 instead of the power resistor as in prior art devices.

However, it has been determined by the present disclosure that applying the energy generated during braking to solenoid 38 can cause mode shifter 16 to activate. It was further determined by the present disclosure that activation of mode shifter 16 while inner basket 24 is spinning would be detrimental to one or more components of washer 10. Advantageously, motor control unit 14 is configured to control the amount of energy dissipated from circuit 18 through solenoid 38 so as to prevent activation of mode shifter 16. More particularly, control unit 14 is configured to dissipate the braking energy from motor 12 through mode shifter 16 only to a level sufficient to maintain the mode shifter in the second or un-activated state.

For example, motor control unit 14 can apply a braking voltage to solenoid 38 when tub 24 is required to stop to dissipate the energy. The braking voltage applied to solenoid 38 during mode-shift braking is below the control voltage necessary to engage mode shifter 16. In this manner, motor control unit 14 ensures that mode shifter 16 is not activated during braking. In one embodiment, circuit 18 is controlled by motor control unit 14 to apply a braking voltage of between about 30 VAC to about 80 VAC to solenoid 38 when tub 24 is required to stop.

Accordingly, washer 10 allows for the elimination of the brake resistor and its associated control circuitry, which reduces the cost of the washer and increases the reliability of the washer due to the decreased number of components.

In the illustrated embodiment, transmission 34 is shown as a pulley-and-belt transmission. However, it is contemplated by the present disclosure for transmission 34 to be a direct drive transmission, a geared transmission, and others.

Also in the illustrated embodiment, mode shifter 16 is shown as including solenoid 16 for moving the shifter between the first and second states. However, it is contemplated by the present disclosure for mode shifter 16 to include any other inductive winding component for moving the shifter between the first and second states. Moreover, it is contemplated by the present disclosure for circuit 18 to dissipate the energy of braking through any other inductive winding component of washer 10, which is controlled by motor control unit 14, where the control unit 14 controls the dissipated energy so as to avoid activating that component.

Washer 10 is configured to utilize the braking provided by circuit 18 during one or more conditions. For example, during the spin cycle of washer 10, the user is able to lift the lid 40 to gain access to tub 24. In order to mitigate against the danger of the user having access to tub 24 when spinning at high speeds, washer 10 is configured to bring the tub to a complete stop in under 7 seconds via circuit 18. In other examples, washer 10 can bring tub 24 to a stop via circuit 18 any time braking of the tub is desired.

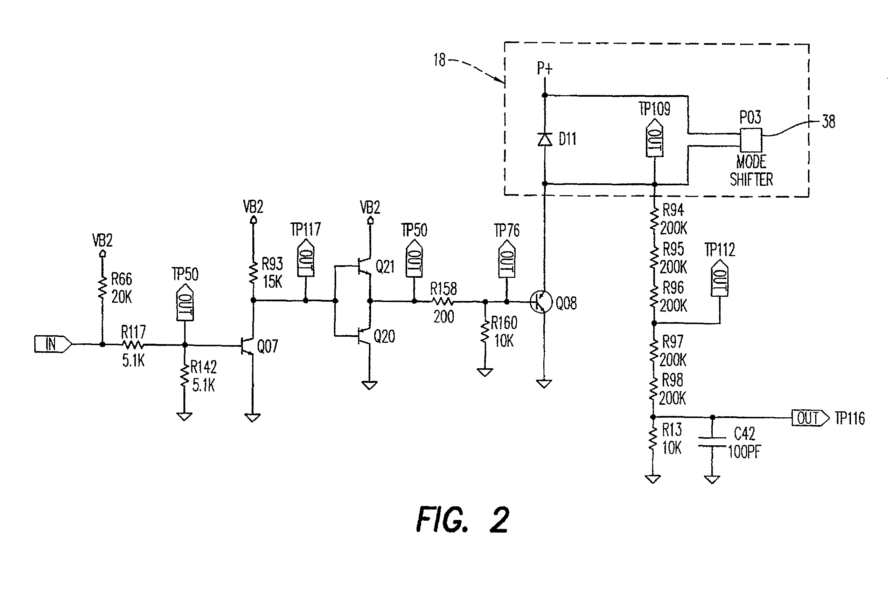

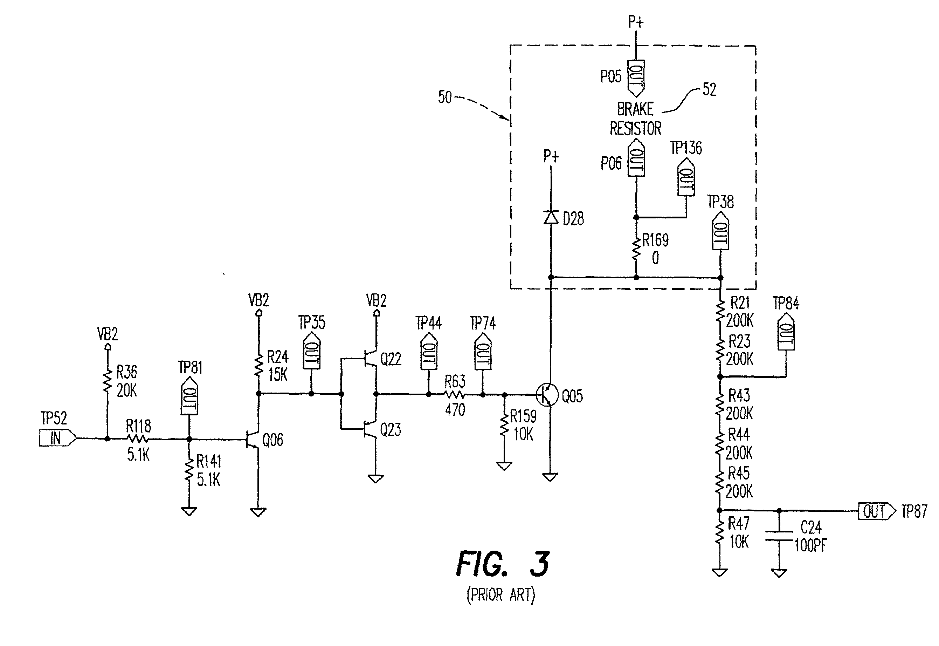

Referring now to FIG. 2, an exemplary embodiment of mode-shifting braking circuit 18 according to the present disclosure is shown. In contrast, FIG. 3 illustrates a prior art resistor braking circuit 50. Circuit 18 applies electrical energy on the motor inverter's DC bus voltage to mode shifter 16. In contrast, circuit 50 applies electrical energy on the motor inverter's DC bus voltage to a specially configured braking resistor 52.

The circuit shown in FIG. 2 involves a staging circuit, a power switch (Q08), a flyback diode (D11), a mode shifter coil (P03), and a sensing circuit. The staging circuit begins on the left with the microprocessor input signal and the signal is amplified through the various transistors within the circuit. The amplified signal drives the power switch that controls the power through the mode shifter coil. The flyback diode (D11) provides an electrical return path for any stored energy in the mode shifter coil; protecting the power switch from inductive spikes. The sensing circuit provides a feedback to the microprocessor and consists of a voltage-dividing network that provides a signal to the microprocessor via TP 116.

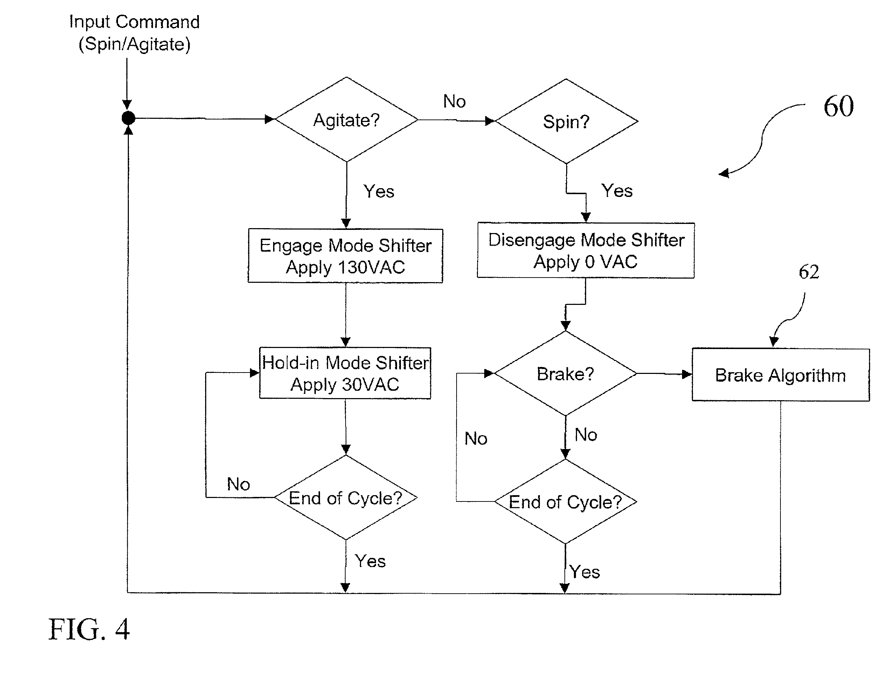

Referring now to FIG. 4, an exemplary embodiment of a method of controlling a washing machine according to the present disclosure is shown and is generally referred to by reference numeral 60.

Advantageously, method 60 includes a mode shift brake algorithm 62. Algorithm 62 is resident on motor control unit 14 and is configured to apply a braking voltage to solenoid 38 when tub 24 is spinning and is required to stop. The braking voltage applied to solenoid 38 by mode-shift braking algorithm 62 is below the control voltage necessary to engage mode shifter 16. In this manner, algorithm 62 ensures that mode shifter 16 is not activated during braking.

When algorithm 62 is braking the embodiment where motor 12 is an AC induction motor, the algorithm is configured to drive the stator of the motor at a lower frequency then the rotor. Algorithm 12 achieves this by monitoring the rotor speed and applying a voltage to the stator that has a smaller frequency than the voltage to the rotor. By driving the stator at a slower speed, algorithm 62 generates a negative torque on the rotor and causes the motor to go into a generating mode. Algorithm 62 continues to lower the driving frequency all the while dumping the generated voltage to solenoid 38 until the rotor speed is zero. Moreover, algorithm 62 balances the negative torque on the rotor, so that the generated voltage, when applied to solenoid 38, is insufficient to activate or engage mode shift 16.

It should also be noted that the terms "first", "second", "third", "upper", "lower", and the like may be used herein to modify various elements. These modifiers do not imply a spatial, sequential, or hierarchical order to the modified elements unless specifically stated.

While the present disclosure has been described with reference to one or more exemplary embodiments, it will be understood by those skilled in the art that various changes may be made and equivalents may be substituted for elements thereof without departing from the scope of the present disclosure. In addition, many modifications may be made to adapt a particular situation or material to the teachings of the disclosure without departing from the scope thereof. Therefore, it is intended that the present disclosure not be limited to the particular embodiment(s) disclosed as the best mode contemplated, but that the disclosure will include all embodiments falling within the scope of the appended claims.

## Claims

1. A washing machine (10) comprising:
a motor (12);
an inductive winding device;
a motor control unit (14) in electrical communication with said motor and said inductive winding device; and
a braking circuit (18) in electrical communication with said inductive winding device and said motor control unit, said braking circuit dissipating a braking energy from said motor through said inductive winding device, and said motor control unit controlling said braking energy so as to avoid activation of said inductive winding device.

2. The washing machine (10) as in claim 1, wherein said inductive winding device comprises a solenoid (38) of a mode shifter (16) and said braking circuit comprises a mode-shifting braking circuit (18).

3. The washing machine (10) as in any preceding claim, further comprising an agitator (26) driven by said motor.

4. The washing machine (10) as in claim 3, wherein said agitator rotates about a vertical axis (28).

5. The washing machine (10) as in any preceding claim, wherein said motor comprises a three-phase alternating current induction motor.

6. The washing machine (10) as in claim 5, wherein said motor control unit is integral with said three-phase alternating current induction motor.

7. A washing machine (10) comprising:
a motor (12);
a motor control unit (14) in electrical communication with said motor;
a mode shifter (16) controlled by said motor control unit between a first state and a second state;
a basket (24) and an agitator (26) configured to be driven by said motor via said mode shifter, said basket being driven by said motor when said mode shifter is in said first state, said agitator and said basket being driven by said motor when said mode shifter is in said second state; and
a mode-shifting braking circuit (18) resident on said motor control unit, said mode-shifting braking circuit dissipating a braking energy from said motor through said mode shifter only to a level sufficient to maintain said mode shifter in said second state.

8. The washing machine (10) as in claim 7, wherein said basket and said agitator are configured to be driven by said motor about a vertical axis (28).

9. The washing machine (10) as in claim 7 or claim 8, further comprising a transmission (34) for transmitting a rotary force from said motor to said mode shifter.

10. The washing machine (10) as in any of claims 7 to 9, wherein said mode shifter comprises a solenoid (38) and said mode-shifting braking circuit dissipates said energy through said solenoid.
